# EUROPÄISCHE PATENTANMELDUNG

(11) **EP 1 188 616 A2**
(43) Veröffentlichungstag der Anmeldung: **20.03.2002**
(21) Anmeldenummer: 01120426.0
(22) Anmeldetag: 27.08.2001
(51) Int. Cl.: B60R 1/06

(54) **Spiegelelement sowie Rückblickspiegel mit einem solchen Spiegelelement**

(30) Priorität: 01.09.2000 DE 20015092 U
(71) Anmelder: MEKRA Lang GmbH & Co. KG, 90765 Fürth (DE)
(72) Erfinder: Lang, Heinrich, 91465 Ergersheim (DE); Seiboth, Wolfgang, 91438 Bad Windsheim (DE)
(74) Vertreter: Winter, Brandl, Fürniss, Hübner, Röss, Kaiser, Polte Partnerschaft

(57) **Zusammenfassung**

Es wird ein Spiegelelement insbesondere für Außenrückblickspiegel von Kraftfahrzeugen bereitgestellt, das eine Spiegeltragplatte (6) und ein auf der Spiegeltragplatte (6) befestigte Spiegelscheibe (4) umfaßt. Dadurch, daß die Spiegeltragplatte (6) wenigstens eine freibleibende Ausnehmung (22) bzw. einen Durchbruch aufweist, kann die Spiegelscheibe (4) nicht vollflächig auf der Spiegeltragplatte (6) aufliegen und die Spiegelscheibe (4) wird dadurch hinsichtlich Vibrationen zum Teil von der Spiegeltragplatte (6) entkoppelt. Durch die Ausnehmungen (22) wird auch erreicht, daß die Spiegeltragplatte (6) leichter und folglich auch das Gesamtsystem leichter wird.

## Beschreibung

Die Erfindung betrifft ein Spiegelelement mit Spiegelscheibe und Spiegeltragplatte, insbesondere für Außenrückblickspiegel von Kraftfahrzeugen, sowie einen Rückblickspiegel mit einem solchen Spiegelelement.

Aus der EP-0 659 609 B1 ist ein Rückblickspiegel bekannt, der ein in einem Gehäuse lösbar befestigtes Spiegelelement bestehend aus Spiegelscheibe und Spiegeltragplatte umfaßt. Hierbei ist die Spiegelscheibe vollflächig auf die Spiegeltragplatte aufgeklebt.

Bei Einsatz von solchen Spiegelelementen in Außenspiegeln von Lastkraftwagen treten häufig starke Vibrationen auf, die im Extremfall zu Ablösungen der Spiegelscheibe von der Tragplatte führen könnten bzw. zu einer Beeinträchtigung der Optik durch die Vibrationen.

Es ist daher Aufgabe der vorliegenden Erfindung, ein Spiegelelement insbesondere für Außenrückblickspiegel von Nutzfahrzeugen bereitzustellen, das weniger vibrationsanfällig ist.

Die Lösung dieser Aufgabe erfolgt durch die Merkmale des Anspruchs 1 bzw. durch die Rückblickspiegel gemäß den Ansprüchen 9 und 10.

Dadurch, daß die Spiegeltragplatte wenigstens eine freibleibende Ausnehmung bzw. einen Durchbruch aufweist, kann die Spiegelscheibe nicht vollflächig auf der Spiegeltragplatte aufliegen, und die Spiegelscheibe wird daher hinsichtlich Vibrationen zum Teil von der Spiegeltragplatte entkoppelt. Durch die Ausnehmungen wird auch erreicht, daß die Spiegeltragplatte leichter und folglich auch das Gesamtsystem leichter wird.

Gemäß einer vorteilhaften Ausgestaltung der Erfindung liegt die Spiegelscheibe auf Noppen auf, so daß die Spiegelscheibe nur noch punktuell auf der Spiegeltragplatte, nämlich auf den Noppen aufliegt und folglich eine noch größere Entkoppelung stattfindet. In dem durch die Noppen definierten Abstand zwischen Spiegeltragplatte und Spiegelscheibe ist eine Klebschicht eingebracht, die die Verbindung zwischen Spiegelscheibe und Spiegeltragplatte gewährleistet. Durch die Elastizität und Plastizität der Klebschicht werden kaum Vibrationen auf die Spiegelscheibe übertragen.

Gemäß einer weiteren vorteilhaften Ausgestaltung der Erfindung sind die Ausnehmungen bzw. Durchbrüche so in die Spiegeltragplatte eingebracht, daß ein umlaufender Randbereich in der Spiegeltragplatte verbleibt, wodurch sich eine erhöhte Stabilität ergibt.

Gemäß einer weiteren vorteilhaften Ausgestaltung der Erfindung ist eine Mehrzahl von freibleibenden Ausnehmungen vorgesehen, die über die Spiegeltragplatte verteilt sind. Durch die Mehrzahl der Ausnehmungen kann die Eigenfrequenz der Spiegeltragplatte bzw. des Gesamtsystems beeinflußt werden, wodurch ebenfalls die Gesamtanfälligkeit gegen Vibrationen verringert werden kann.

Gemäß einer weiteren vorteilhaften Ausgestaltung der Erfindung umfassen die Ausnehmungen eine Fläche von 10% bis 70% und vorzugsweise von 15% bis 50% der Fläche der Spiegelscheibe. Hierdurch wird eine ausreichende Stabilität gewährleistet und dennoch der positive Effekt hinsichtlich der besseren Vibrationsverhaltens erreicht.

Gemäß einer weiteren vorteilhaften Ausgestaltung der Erfindung sind die Ausnehmungen unterschiedlich groß, wodurch ebenfalls gezielt das Vibrationsverhalten beeinflußt werden kann.

Gemäß einer weiteren vorteilhaften Ausgestaltung der Erfindung sind mittig, kreissektorförmige Ausnehmungen bzw. Durchbrüche vorgesehen. Zwischen den Ausnehmungen sind Speichen angeordnet, die zu einer zentralen Nabe zusammenlaufen. Bei der zentralen Nabe erfolgt der Anguß der Spiegeltragplatte. Diese Ausführungsform verbessert das Fließverhalten des fließfähigen Kunststoffs bei der Herstellung der Spiegeltragplatte im Spritzgußverfahren.

Bei dem Rückblickspiegel gemäß Anspruch 9 ist das Spiegelelement an dem Gehäuse befestigt, und das Gehäuse ist verstellbar an einem Halter angelagert.

Bei dem Rückblickspiegel gemäß Anspruch 10 ist das Spiegelelement an einer Halteplatte befestigt, die mit einem Verstellmechanismus verbunden ist.

Weitere Einzelheiten, Merkmale und Vorteile der Erfindung ergeben sich aus der nachfolgenden Beschreibung bevorzugter Ausführungsformen anhand der Zeichnungen.

Es zeigt:
Fig. 1 eine erste Ausführungsform eines Rückblickspiegels gemäß der Erfindung, bei der das Spiegelelement mittels Rastelementen am Gehäuserand eines Rückspiegelgehäuses befestigt ist,
Fig. 2 eine zweite Ausführungsform eines Rückblickspiegels gemäß der Erfindung, bei der das Spiegelelement mittels Rastelementen an der Innenseite der Gehäuserückwand eines Rückblickspiegels befestigt ist,
Fig. 3 eine Aufsicht auf eine Spiegeltragplatte einer ersten Ausführungsform eines Spiegelelements gemäß der Erfindung mit einer zentralen Ausnehmung,
Fig. 4 eine Schnittdarstellung durch die Ausführungsform nach Fig. 3 entlang der Linie A-A,
Fig. 5 eine Schnittdarstellung durch durch die Ausführungsform nach Fig. 3 entlang der Linie B-B,
Fig. 6 eine Aufsicht auf eine Spiegeltragplatte gemäße einer zweiten Ausführungsform der Erfindung, und
Fig. 7 eine Aufsichte auf eine Spiegeltragplatte gemäß einer dritten Ausführungsform.

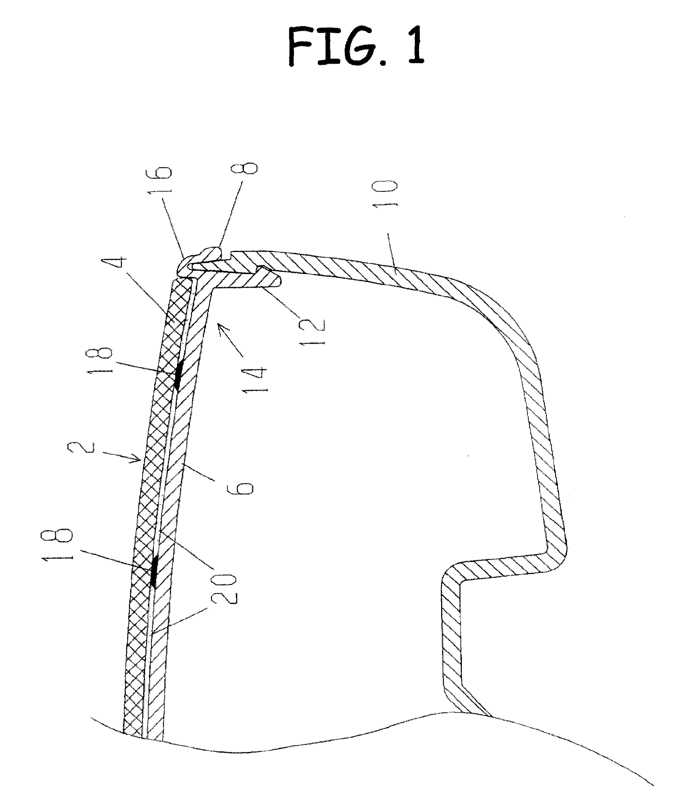

Fig. 1 zeigt eine erste Ausführungsform der Erfindung, bei dem ein erfindungsgemäßes Spiegelelement 2 mit Spiegelscheibe 4 und Spiegeltragplatte 6 am Rand 8 eines Rückblickspiegelgehäuses 10 mittels Rastelementen 12 befestigt ist. Die Rastelemente 12 sind dabei einstückig im Randbereich 14 an die Spiegeltragplatte 6 angeformt. Die Spiegeltragplatte 6 weist im Randbereich 14 in Verlängerung der Rastelemente 12 noch eine umlaufende Nut 16 auf, die den Rand 8 des Spiegelgehäuses 10 übergreift. Hierdurch wird das Innere des Spiegelgehäuses 10 gegen äußere Umwelteinflüsse abgedichtet. Allerdings wird durch diese Befestigung auch eine enge Koppelung zwischen dem Spiegelgehäuse 10 und dem Spiegelelement 2 hergestellt, so dass bei Verwendung von herkömmlichen Spiegelelementen Vibrationen vom Fahrzeug über das Spiegelgehäuse 10 auf das Spiegelelement 2 übertragen werden.

An die Spiegeltragplatte 6 sind einstückig Noppen 18 angeformt, auf denen die Spiegelscheibe 4 aufliegt. In dem durch die Noppen 18 zwischen Spiegelscheibe 4 und Spiegeltragplatte 6 definierten Zwischenraum befindet sich eine Klebstoffschicht 20 mittels der die Spiegelscheibe 4 auf der Spiegeltragplatte 6 befestigt ist.

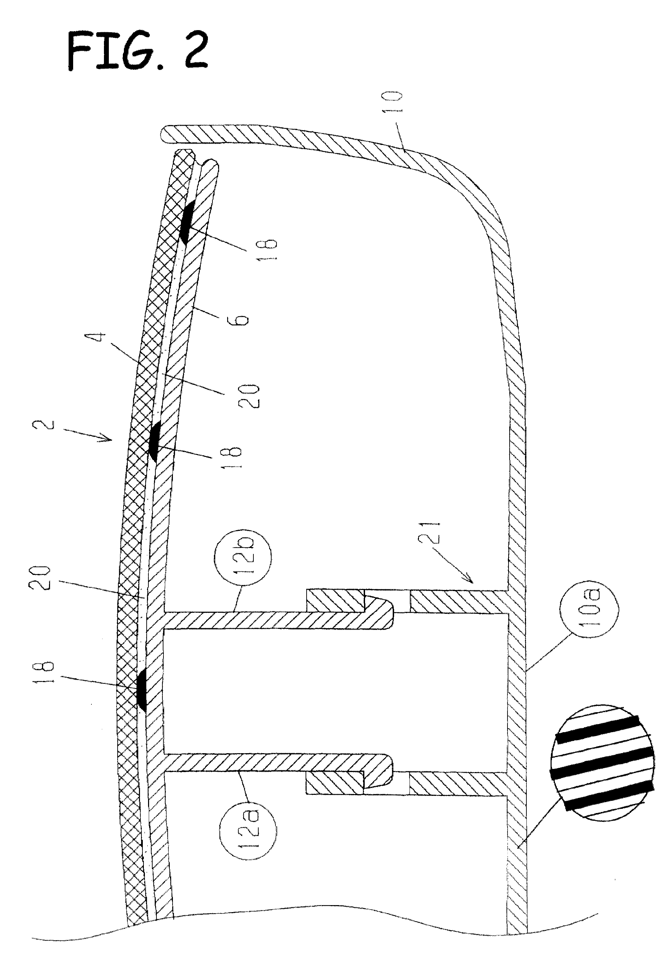

Fig. 2 zeigt eine zweite Ausführungsform der Erfindung, bei der das Spiegelelement 2 mittels den Rastelementen 12 an einer Halteeinrichtung 21 auf der Innenrückseite des Spiegelgehäuses 10 befestigt ist.

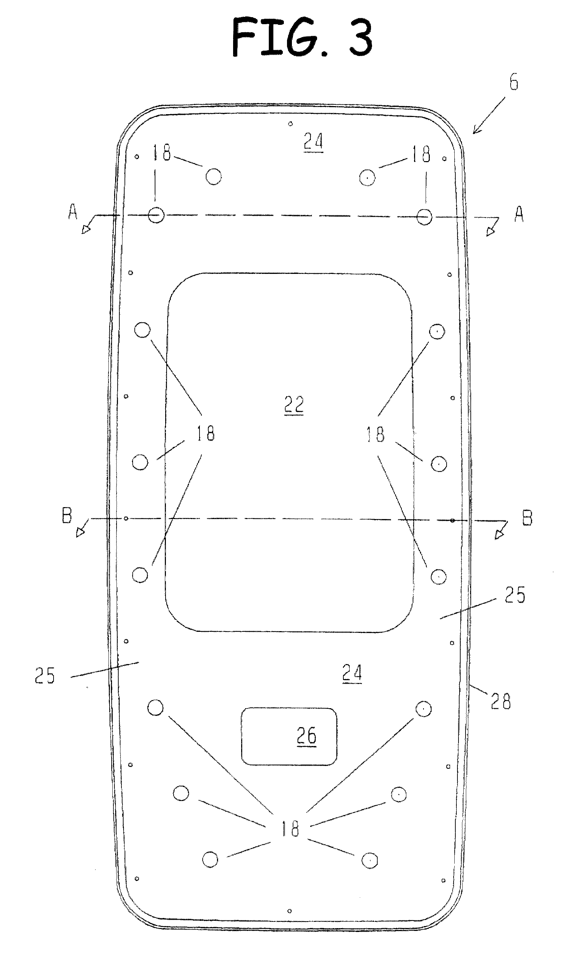

Verschiedene Varianten von Spiegelelementen 2, die in der Ausführungsformen nach Fig. 1 und 2 eingesetzt werden können werden nachfolgend anhand der Figuren 3 bis 7 beschrieben.

Die Figuren 3 bis 5 zeigen eine erste Ausführungsform eines Spiegelelements gemäß der vorliegenden Erfindung. Fig. 3 zeigt eine Aufsicht auf die Spiegeltragplatte 6. Die Spiegeltragplatte 6 weist eine zentrale, freibleibende Ausnehmung 22 auf, so dass die Spiegelscheibe 4 - in Fig. 3 nicht dargestellt - nur in den verbleibenden Kontaktbereichen 24 auf der Spiegeltragplatte 6 aufliegen kann. Die Kontaktbereiche 24 umfassen einen geschlossenen umlaufenden Randbereich 25, d.h. die Ausnehmung 22 liegt im Inneren der Spiegeltragplatte 6. In den Kontaktbereichen 24 sind die Noppen 16 angeordnet, auf denen die Spiegelscheibe 4 aufliegt. Durch eine Öffnung 26 werden elektrische Anschlüsse für eine Spiegelheizung durch die Spiegeltragplatte 6 hindurchgeführt.

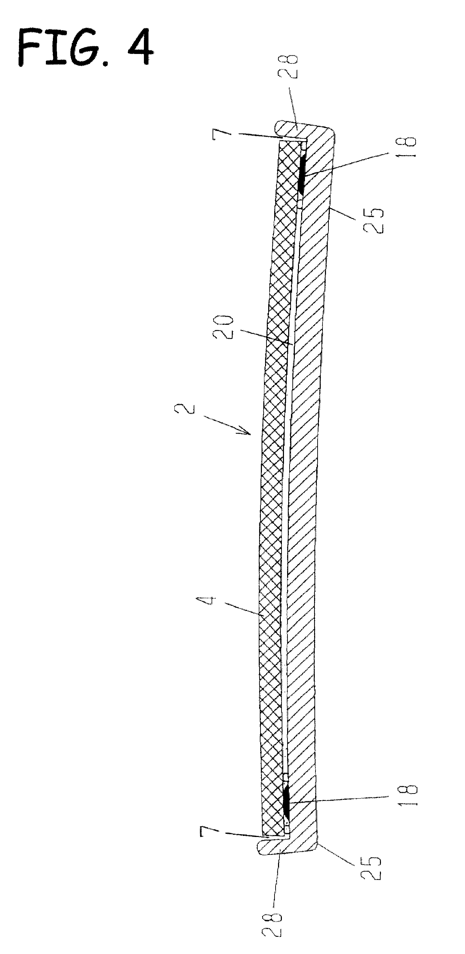

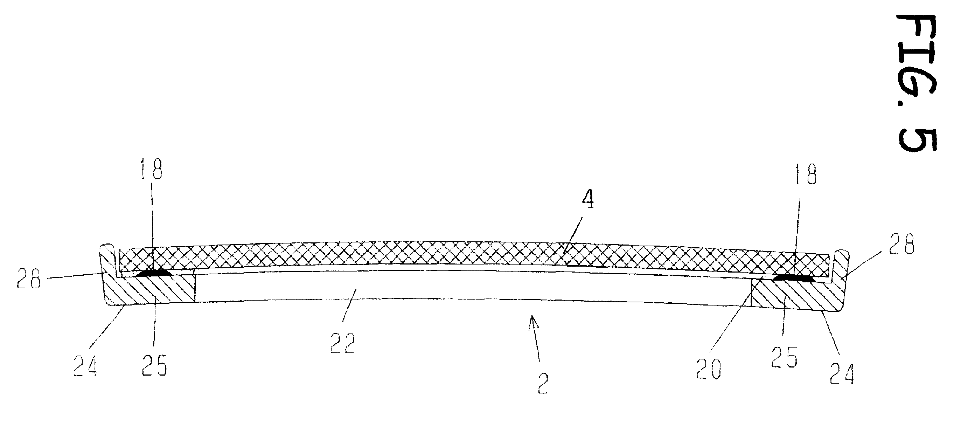

Die Figuren 4 und 5 zeigen jeweils Schnittdarstellungen der ersten Ausführungsform des Spiegelelements 2 und zwar Fig. 4 entlang der Linie A-A und Fig. entlang der Linie B-B. Die Schnittdarstellungen der Figuren 4 und 5 zeigen jeweils das Spiegelelement 2, während Fig. 3 nur die Spiegeltragplatte 6 zeigt. Die Spiegeltragplatte 6 weiste an ihrer Außenkante einen umlaufenden Rand 28 auf, so dass die Spiegelscheibe 6 in einer Vertiefung in der Spiegeltragplatte 6 liegt.

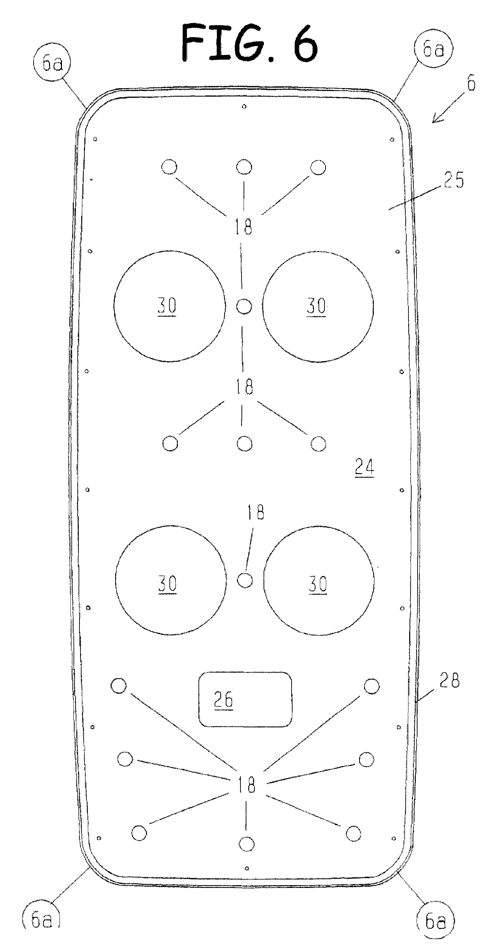

Fig. 6 zeigt eine Spiegeltragplatte 6 einer zweiten Ausführungsform des Spiegelelements 2 gemäß der vorliegenden Erfindung, bei der insgesamt vier kreisförmige, freibleibende Ausnehmungen 30 wie die Eckpunkte eines Quadrats auf der Spiegeltragplatte 6 angeordnet sind. Zusätzlich ist wieder die Öffnung 26 für die elektrischen Anschlüsse vorgesehen. Der übrige Aufbau des Spiegelelements 2 entspricht den vorhergehend beschriebenen Ausführungsformen.

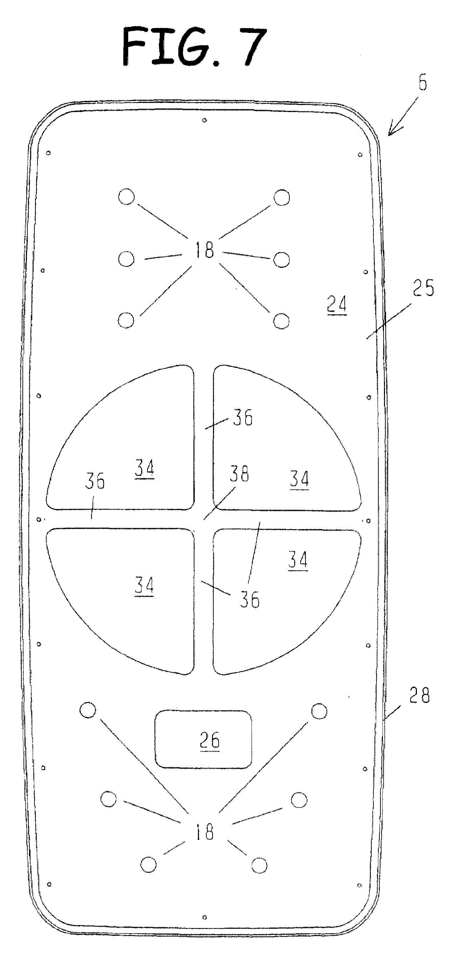

Fig. 7 zeigt die Spiegeltragplatte 6 einer dritten Ausführungsform der Erfindung, bei der vier kreissektorförmige Ausnehmungen 34 vorgesehen sind. Die vier kreissektorförmigen Ausnehmungen 34 sind zentral über der Öffnung 26 so angeordnet, daß sich eine in etwa kreisförmige Öffnung mit vier Sektoren ergibt, die durch kreuzförmig verlaufende Stege 36 mit einer zentralen Nabe 38 voneinander abgetrennt werden. An der Nabe 38 erfolgt bei der Herstellung der Spiegeltragplatte 6 der Anguß.

### Bezugszeichenliste:

- 2: Spiegelelement
- 4: Spiegelscheibe
- 6: Spiegeltragplatte
- 8: Rand des Spiegelgehäuses
- 10: Spiegelgehäuse
- 12: Rastelement
- 14: Randbereich von 6
- 16: umlaufende Nut
- 18: Noppen
- 20: Klebstoffschicht
- 21: Halteeinrichtung
- 22: Ausnehmung
- 24: Kontaktbereiche
- 25: geschlossener umlaufender Randbereich
- 26: Öffnung für elektrische Anschlüsse
- 28: umlaufender Rand
- 30: kreisförmige Ausnehmung
- 34: kreissektorförmige Ausnehmungen
- 36: Stege
- 38: Nabe

## Patentansprüche

1. Spiegelelement, insbesondere für Außenrückblickspiegel von Kraftfahrzeugen, mit einer Spiegeltragplatte (6), die Halteelemente (12) zur Befestigung der Spiegeltragplatte (6) an einem Rückblickspiegelkörper (10) umfaßt, und mit einer auf der Spiegeltragplatte (6) befestigten Spiegelscheibe (4), **dadurch gekennzeichnet,**
**dass** die Spiegeltragplatte (6) wenigstens eine freibleibende Ausnehmung (22; 30; 34) aufweist und die Spiegelscheibe (4) nur in Kontaktbereichen (18; 24) auf der Spiegeltragplatte (6) aufliegt.

2. Spiegelelement nach Anspruch 1, **dadurch gekennzeichnet, dass** in den Kontaktbereichen (24) der Spiegeltragplatte (6) Noppen (18) angebracht sind, auf denen die Spiegelscheibe (4) aufliegt.

3. <Spiegelelment nach Anspruch 1 oder 2, **dadurch gekennzeichnet, dass** Spiegelscheibe (4) und Spiegeltragplatte (6) mittels einer Klebstoffschicht (20) miteinander verklebt sind.

4. Spiegelelement nach einem der vorhergehenden Ansprüche, **dadurch gekennzeichnet, dass** die Spiegeltragplatte (6) einen geschlossenen umlaufenden Randbereich (25) aufweist.

5. Spiegelelement nach einem der vorhergehenden Ansprüche, **dadurch gekennzeichnet, dass** eine Mehrzahl von freibleibenden Ausnehmungen (30; 34) über die Fläche der Spiegeltragplatte (6) verteilt sind.

6. Spiegelelement nach einem der vorhergehenden Ansprüche, **dadurch gekennzeichnet, dass** die Ausnehmungen (22; 30; 34) eine Fläche von 10% bis 70% und vorzugsweise 15% bis 50% der Fläche der Spiegelscheibe (6) überdecken.

7. Spiegelelement nach einem der vorhergehenden Ansprüche, **dadurch gekennzeichnet, dass** die Ausnehmungen unterschiedliche Größen aufweisen.

8. Spiegelelement nach einem der vorhergehenden Ansprüche 5 bis 7, **dadurch gekennzeichnet, dass** die Ausnehmungen (34) kreissecktorförmig sind und dass zwischen den kreissektorförmigen Ausnehmungen (34) Stege (36) verbleiben, die auf eine gemeinsame Nabe (38) zulaufen.

9. Rückblickspiegel für Kraftfahrzeuge mit einem Haltearm, mit einem an dem Haltearm verstellbaren Gehäuse (10) und mit einem gegenüber dem Gehäuse (10) unverstellbaren aber auswechselbaren Spiegelelement (2) nach einem der vorhergehenden Ansprüche.

10. Rückblickspiegel für Kraftfahrzeuge mit einem Haltearm, einer in einem Gehäuse (10) angeordneten Halteplatte, an der das Gehäuse (10) gehalten ist und die mittels einer Haltevorrichtung am Haltearm befestigt ist, und mit einem an der Halteplatte lösbar befestigten Spiegelelement (2) nach einem der vorhergehenden Ansprüche 1 bis 8.
